# EUROPÄISCHE PATENTANMELDUNG

(11) **EP 0 864 352 A2**
(43) Veröffentlichungstag der Anmeldung: **16.09.1998**
(21) Anmeldenummer: 98103856.5
(22) Anmeldetag: 05.03.1998
(51) Int. Cl.: B01D 53/50, B01D 3/34

(54) **Verfahren zur Reinigung eines Abgases einer Feuerungsanlage**

(30) Priorität: 10.03.1997 DE 19709803
(71) Anmelder: Deutsches Zentrum für Luft- und Raumfahrt e.V., 53175 Bonn (DE)
(72) Erfinder: Buschulte, Winfried, Prof. Dr.-Ing., 74196 Neuenstadt a.K. (DE)
(74) Vertreter: Hoeger, Stellrecht & Partner

(57) **Zusammenfassung**

Um ein Verfahren zur Reinigung eines Abgases einer Feuerungsanlage, insbesondere einer Ölfeuerungsanlage, bei dem das Abgas in einem Restwärmetauscher Restwärme, welche restliche fühlbare und latente Wärme umfaßt, an ein Zwischenträgermedium abgibt und bei dem das Abgas mittels Zwischenträgermedium gereinigt und insbesondere entschwefelt wird, wobei das Zwischenträgermedium in einem Zwischenträgermedium-Umlauf geführt wird und mittels eines Neutralisationsmittels neutralisiert wird, derart zu verbessern, daß gegenüber bekannten Verfahren eine höhere Funktionssicherheit bei optimaler Nutzung der Restwärme und optimaler Reinigung des Abgases erreicht werden kann, wird vorgeschlagen, daß das Zwischenträgermedium vom Neutralisationsmittel abgekoppelt wird, wenn Überneutralisierung des Zwischenträgermediums eintreten kann.

## Beschreibung

Die Erfindung betrifft ein Verfahren zur Reinigung eines Abgases einer Feuerungsanlage, insbesondere einer Ölfeuerungsanlage, bei dem Abgas in einem Restwärmetauscher Restwärme, welche restliche fühlbare und latente Wärme umfaßt, an ein Zwischenträgermedium abgibt, und bei dem das Abgas mittels Zwischenträgermedium gereinigt und insbesondere entschwefelt wird, wobei das Zwischenträgermedium in einem Zwischenträgermedium-Umlauf geführt wird und mittels eines Neutralisationsmittels neutralisiert wird.

Ferner betrifft die Erfindung eine Vorrichtung zur Reinigung und insbesondere Entschwefelung eines Abgases einer Feuerungsanlage und insbesondere einer Ölfeuerungsanlage, welche einen Restwärmetauscher umfaßt, in dem durch das Abgas Restwärme, welche restliche fühlbare und latente Wärme umfaßt, an ein Zwischenträgermedium abgebbar ist, wobei das Abgas mittels des Zwischenträgermediums reinigbar ist und wobei das Zwischenträgermedium in einem Zwischenträgermedium-Umlauf geführt ist, und welche einen Neutralisator mit einem Neutralisationsmittel zur Neutralisierung des Zwischenträgermediums umfaßt.

Weiter betrifft die Erfindung einen Neutralisator zur Neutralisierung eines flüssigen Mediums, insbesondere zur Neutralisierung eines Abgaskondensats in einer Heizungsanlage, bei welcher die Restwärme, welche restliche fühlbare und latente Wärme umfaßt, eines Abgases einer Feuerungsanlage der Heizungsanlage genutzt wird, welcher einen Behälter umfaßt, in dem ein Neutralisationsmittel angeordnet ist und welcher von dem flüssigen Medium durchströmbar ist.

Aus der EP 0 151 398 ist ein Verfahren zur Rauchgasentschwefelung bei Heizöl-Haushaltsfeuerungen bekannt, bei dem ein Teil eines rezirkulierenden Kondensats mittels einer Bypassleitung um einen Neutralisator herumgeführt werden kann, um dadurch den pH-Wert des rezirkulierenden Kondensats einzustellen.

Der vorliegenden Erfindung liegt die Aufgabe zugrunde, ein Verfahren der eingangs genannten Art derart zu verbessern, daß gegenüber bekannten Verfahren eine höhere Funktionssicherheit bei optimaler Nutzung der Restwärme und optimaler Reinigung des Abgases erreicht werden kann.

Diese Aufgabe wird bei der vorliegenden Erfindung mit den eingangs genannten Merkmalen dadurch gelöst, daß das Zwischenträgermedium vom Neutralisationsmittel abgekoppelt wird, wenn Überneutralisierung des Zwischenträgermediums eintreten kann.

Bei den bekannten Verfahren zur Reinigung des Abgases, welches einen Schwefeldioxidgehalt aufweist, durch Auswaschen mittels einer Neutralisationsmittel-Lösung, beispielsweise mittels einer Mg-(OH)₂-Wasser-Lösung, welche durch Lösen von MgO in Wasser entsteht, zeigt es sich, daß sich an kritischen Durchlaßstellen Ablagerungen aus festen Neutralisationsmittelverbindungen, insbesondere Magnesiumverbindungen bei der Verwendung von MgO als Neutralisationsmittel, bilden.

Derartige Ablagerungen können Funktionsstörungen auslösen. Diese Ablagerungen entstehen dadurch, daß Überneutralisierung des Zwischenträgermediums in den basischen Bereich auftritt, da durch Stillstand einer Zwischenträgermedium-Zirkulation, beispielsweise bei einem Brennerstillstand und weiterhin Beaufschlagung des Zwischenträgermediums mit Neutralisationsmittel ohne daß Verunreinigungen durch das Zwischenträgermedium ausgewaschen werden, der pH-Wert zunimmt. Ist der basische Bereich mit einem pH-Wert größer als 7 erreicht, dann fällt aufgrund einer Verschiebung des Lösungsgleichgewichts aus dem Zwischenträgermedium festes Neutralisationsmittel aus, welches die Ablagerungen verursacht. Bei dem erfindungsgemäßen Verfahren wird das Zwischenträgermedium vom Neutralisationsmittel abgekoppelt, so daß sich der pH-Wert des Zwischenträgermediums nicht weiter erhöhen kann. Dadurch wird ein Ausfallen und damit Ablagerungen und die in der Folge verursachten Funktionsstörungen verhindert.

Besonders vorteilhaft ist es, wenn das Zwischenträgermedium vom Neutralisationsmittel bei Stillstand eines Brenners der Feuerungsanlage und/oder bei Anhalten einer Zwischenträgermedium-Zirkulation im Zwischenträgermedium-Umlauf abgekoppelt wird. Durch den Stillstand des Brenners wird kein weiteres Abgas zugeführt, so daß sich der pH-Wert des Zwischenträgermediums nicht weiter in den sauren Bereich verschieben kann. Wäre aber das Zwischenträgermedium weiterhin mit Neutralisationsmittel beaufschlagt, dann würde sich der pH-Wert des Zwischenträgermediums im Zwischenträgermedium-Umlauf zu größeren Werten und schließlich in den alkalischen Bereich verschieben. Dies würde ein Ausfallen von festem Neutralisationsmittel verursachen. Dies wird durch die Abkopplung des Zwischenträgermediums vom Neutralisationsmittel gerade verhindert.

Um das Ausfallen von Neutralisationsmittel und das Entstehen von Funktionsstörungen verursachenden Ablagerungen zu verhindern, ist es insbesondere zweckmäßig, daß das Zwischenträgermedium auf einen pH-Wert im Bereich von 5,5 bis 7 und insbesondere auf ca. 6,5 neutralisiert wird. Dadurch wird einerseits verhindert, daß das Zwischenträgermedium in einem zu sauren Bereich liegt, welcher zu starker Korrosion von Anlagenteilen führen würde, und andererseits der basische Bereich nicht erreicht wird, welches zu Ablagerungen führen würde.

Insbesondere ist es vorteilhaft, wenn als Neutralisationsmittel ein Metalloxid und insbesondere ein Alkali- oder Erdalkalioxid verwendet wird. Mit derartigen Neutralisationsmitteln läßt sich auf einfache und kostengünstige Weise ein hoher Anteil von im Zwischenträgermedium gelösten SO₂ bzw. SO₃ aus dem Zwischenträgermedium entfernen.

Besonders kostengünstig und für den genannten Zweck geeignet ist MgO als Neutralisationsmittel. Daneben sind auch andere Neutralisationsmittel, wie CaO und/oder NaOH, als Neutralisationsmittel einsetzbar.

In einer besonders günstigen Variante einer Ausführungsform ist das Neutralisationsmittel in einem Neutralisator angeordnet, welcher von dem Zwischenträgermedium durchströmbar ist. Auf diese Weise läßt sich der Neutralisierungsgrad des Zwischenträgermediums durch das Neutralisationsmittel auf einfache und kontrollierte Weise einstellen.

In einer fertigungsmäßig besonders einfachen Ausführungsform wird die Abkopplung des Zwischenträgermediums vom Neutralisationsmittel durch ein Trockenfallen des Neutralisationsmittels in dem Neutralisator bewirkt. Dadurch ist das Zwischenträgermedium in dem Zwischenträgermedium-Umlauf nicht mehr mit Neutralisationsmittel beaufschlagt, und der pH-Wert des Zwischenträgermediums kann sich nicht weiter in Richtung von basischen pH-Werten verschieben.

Auf besonders einfache Weise läßt sich dies dadurch erreichen, daß der Neutralisator bezogen auf die Schwerkraftrichtung oberhalb einer Abführung für Zwischenträgermedium aus einem Kondensatsumpf des Restwärmetauschers angeordnet ist, so daß durch die Schwerkraft ein Trockenfallen des Neutralisators bewirkbar ist, da Zwischenträgermedium aus dem Neutralisator abfließen und über die Abführung abgeleitet werden kann.

Zur Erzielung und zur Einstellung des gewünschten Neutralisationsgrades ist es günstig, wenn das Neutralisationsmittel als Granulat vorliegt. Dadurch weist das Neutralisationsmittel eine hohe, durch das Zwischenträgermedium benetzbare Oberfläche auf.

Es ist dann vorteilhaft, wenn das Maß der durch das Zwischenträgermedium benetzten Neutralisationsmittel-Oberfläche einstellbar ist, um den gewünschten Neutralisationsgrad im Zwischenträgermedium zu erreichen.

Dazu wird günstigerweise der pH-Wert des Zwischenträgermediums an mindestens einer Stelle im Zwischenträgermedium-Umlauf gemessen. Günstigerweise wird die durch das Zwischenträgermedium benetzte Neutralisationsmittel-Oberfläche so eingestellt, daß sich der vorgesehene pH-Wert im Zwischenträgermedium einstellt.

Vorteilhafterweise ist das Zwischenträgermedium durch ein Abgaskondensat gebildet. Ein derartiges Zwischenträgermedium läßt sich auf einfache Weise zum Wärmetausch und zur Abgasreinigung verwenden.

Bevorzugterweise wird das aus dem Abgas abgeschiedene Kondensat mehrmals im Zwischenträgermedium-Umlauf als Zwischenträgermedium geführt, bevor es aus dem Zwischenträgermedium-Umlauf abgeführt wird. Das abgeführte Zwischenträgermedium ist dann mit Metallsulfat angereichert. Dieses entsteht durch die Verbindung des im Zwischenträgermedium gelösten SO₂ mit den Metallionen.

Vorteilhafterweise wird das abgeführte Zwischenträgermedium mit Wasser verdünnt, um die Verringerung der Konzentration an Metallsulfationen zu verringern, so daß das abgeführte Zwischenträgermedium beispielsweise der Kanalisation zuführbar ist.

Um eine optimale Wärmeaufnahme des Zwischenträgermediums aus dem Abgas und einen optimalen Reinigungserfolg des Abgases mit Entschwefelungsraten von 99 % und mehr zu erreichen, ist es besonders vorteilhaft, wenn ein Restwärmetauscher des Abgases mit dem Zwischenträgermedium und die Abgasreinigung durch das Zwischenträgermedium im wesentlichen in getrennten Stufen erfolgt. Insbesondere ist dann vorteilhaft, wenn zur Abgasreinigung ein Abgasreinigungsreaktor vorgesehen ist, der vom Restwärmetauscher getrennt ist.

Besonders günstig ist es dann, wenn bezogen auf den Abgasstrom die Abgasreinigung der Wärmetauschstufe nachgeschaltet ist, so daß heißes Abgas aus der Feuerungsanlage zuerst den Restwärmetauscher zum Wärmetausch durchläuft.

In einer besonders günstigen Variante einer Ausführungsform ist der Abgasreinigungsreaktor bezogen auf die Schwerkraftrichtung oberhalb des Restwärmetauschers angeordnet. Dadurch läßt sich der Aufwand für Abgas- und Zwischenträgermedium-Leitungen und damit insbesondere Wärmeverluste in diesen Leitungen gering halten.

Vorteilhafterweise umfaßt der Zwischenträgermedium-Umlauf einen ersten Zwischenträgermedium-Kreislauf, in dem das Zwischenträgermedium Wärme aus dem Abgas aufnimmt, und einen zweiten Zwischenträgermedium-Kreislauf, in dem das Zwischenträgermedium zur Reinigung des Abgases dient. Die zwei Kreisläufe lassen sich dann unabhängig voneinander auf ihren jeweiligen Zweck hin optimieren.

Vorteilhafterweise ist das Zwischenträgermedium in einer Führungsstrecke des Zwischenträgermedium-Umlaufes geführt, welche dem ersten und dem zweiten Zwischenträgermedium-Kreislauf gemeinsam ist. Auf diese Weise läßt sich der konstruktive Aufwand gering halten, da insbesondere Leitungen eingespart werden können. Außerdem lassen sich die beiden Kreisläufe dadurch so koppeln, daß sich der gewünschte Neutralisationsgrad einstellt.

Günstigerweise gibt das Zwischenträgermedium mittels eines Zwischenträgermedium-Heizwasser-Wärmetauschers, welcher im ersten Zwischenträgermedium-Kreislauf angeordnet ist, Wasser an Heizwasser in einem Heizkreis ab. Auf diese Weise läßt sich die vom Zwischenträgermedium aus dem Abgas aufgenommene Wärme optimal nutzen.

Eine optimale Abgasreinigung bei optimaler Nutzung der Restwärme ist dadurch erreicht, daß der Massestrom des Zwischenträgermediums im zweiten Kreislauf beim 2,8-fachen bis 25-fachen und insbesondere beim ca. 7-fachen des Massestroms im ersten Kreislauf liegt. Durch diese Wahl des Verhältnisses der Masseströme ist erreicht, daß sich bei der Wärmetauschstufe die Restwärme im wesentlichen vollständig aus dem Abgas entziehen läßt und in einem zweiten Teilschritt die Reinigung des Abgases, welche bereits teilweise im ersten Teilschritt stattfindet, vervollständigen läßt, wobei ein Warmeaustausch zwischen dem Reinigungsmedium und dem Abgas beim zweiten Teilschritt im wesentlichen nicht stattfindet. Auf diese Weise lassen sich Entschwefelungsgrade von 99 % und mehr erreichen.

Konstruktiv besonders günstig ist es, wenn die gemeinsame Führungsstrecke für das Zwischenträgermedium einen Abgasreinigungsraum des Abgasreinigungsreaktors umfaßt. Auf diese Weise läßt sich der Aufwand insbesondere für Zwischenträgermedium-Leitungen gering halten.

In einer günstigen Variante einer Ausführungsform wird das Zwischenträgermedium von dem Abgasreinigungsreaktor dem Restwärmetauscher zugeführt. Dies ermöglicht ein Schließen des Zwischenträgermedium-Umlaufs auf einfache Weise.

Besonders vorteilhaft ist es dann, wenn Zwischenträgermedium von der Zuführung vom Abgasreinigungsreaktor zum Restwärmetauscher zur Bildung des zweiten Kreislaufes abgezweigt wird. Die Abzweigung erfolgt dadurch zwar ein Zwischenträgermedium, das im wesentlichen im Abgasreinigungsreaktor keine Wärme aus dem Abgas aufgenommen hat, da das Abgas diese bereits in der Restwärmetauscherstufe an das Zwischenträgermedium abgegeben hat.

In einer besonders vorteilhaften Ausführungsform des erfindungsgemäßen Verfahrens wird das Zwischenträgermedium im zweiten Kreislauf durch einen Neutralisator geführt, in dem das Neutralisationsmittel angeordnet ist. Auf diese Weise läßt sich insbesondere eine Überneutralisierung des Zwischenträgermediums verhindern, da die Beförderung des Zwischenträgermediums im zweiten Kreislauf beispielsweise unabhängig von der Beförderung des Zwischenträgermediums im ersten Kreislauf steuerbar und insbesondere abschaltbar ist.

Bei einer günstigen Ausführungsform ist es vorgesehen, daß ein Brennerstillstand ein Anhalten der Zirkulation des Zwischenträgermediums im zweiten Zwischenträgermedium-Kreislauf bewirkt. Auf diese Weise wird das Zwischenträgermedium im ersten Zwischenträgermedium-Kreislauf nicht weiter mit Neutralisationsmittel beaufschlagt, und ein Erhöhen des pH-Wertes des Zwischenträgermediums in den basischen Bereich wird verhindert.

Günstigerweise ist es dann vorgesehen, daß bei Stillstand des Brenners das Zwischenträgermedium im ersten Kreislauf zur Abgabe der aufgenommenen Wärme noch mindestens einen Durchlauf durchführt. Auf diese Weise läßt sich zum einen eine Überneutralisierung des Zwischenträgermediums bei Stillstand des Brenners verhindern, andererseits kann die vom Zwischenträgermedium beim Durchlaufen des Restwärmetauschers aufgenommene Wärme noch genutzt werden, und diese Wärme ist in dem Umlauf an den Zwischenträgermedium-Heizwasser-Wärmetauscher an das Heizwasser im Heizkreis abgebbar.

In einer vorteilhaften Variante einer Ausführungsform des erfindungsgemäßen Verfahrens erfolgt das Anhalten der Zirkulation des Zwischenträgermediums im zweiten Zwischenträgermedium-Kreislauf in einer bestimmten Zeitspanne vor dem Brennerstillstand. Insbesondere durch Anpassung dieser Zeitspanne läßt sich dann erreichen, daß der gewünschte Neutralisationsgrad in dem Zwischenträgermedium auch bei Stillstand des Brenners vorliegt, und andererseits läßt sich noch die im Restwärmetauscher aufgenommene Wärme des Zwischenträgermediums nutzen. Um dies zu erreichen, bewirkt günstigerweise ein Brennschlußsignal der Feuerungsanlage vor dem Bewirken eines Brennerstillstands ein Anhalten der Zirkulation des Zwischenträgermediums im zweiten Zwischenträgermedium-Kreislauf. Das Anhalten der Zirkulation von Zwischenträgermedium im zweiten Zwischenträgermedium-Kreislauf läßt sich auf konstruktiv einfache Weise durch das Schließen eines Steuerventils im zweiten Zwischenträgermedium-Kreislauf bewirken.

Der Erfindung liegt weiter die Aufgabe zugrunde, eine Vorrichtung der eingangs erwähnten Art zu schaffen, mit welcher eine Reinigung und insbesondere Entschwefelung des Abgases bei optimaler Nutzung der Restwärme des Abgases erzielt wird.

Diese Aufgabe wird bei der vorliegenden Erfindung mit den eingangs genannten Merkmalen dadurch gelöst, daß die Vorrichtung ein Mittel zum Abkoppeln des Zwischenträgermediums im Neutralisator umfaßt, um eine Überneutralisierung des Zwischenträgermediums zu verhindern.

Diese erfindungsgemäße Vorrichtung weist die bereits im Zusammenhang mit dem erfindungsgemäßen Verfahren diskutierten Vorteile auf.

Bevorzugte Ausgestaltungen der erfindungsgemäßen Vorrichtung sind Gegenstand der Ansprüche 35 bis 61, deren Vorteile bereits im Zusammenhang mit den bevorzugten Ausgestaltungen des erfindungsgemäßen Verfahrens gemäß den Ansprüchen 2 bis 33 erläutert wurden.

Ferner liegt der vorliegenden Erfindung die Aufgabe zugrunde, einen Neutralisator mit den eingangs genannten Merkmalen zu schaffen, der universell einsetzbar ist.

Diese Aufgabe wird bei dem erfindungsgemäßen Neutralisator mit den eingangs genannten Merkmalen dadurch gelöst, daß das Maß der Beaufschlagung des flüssigen Mediums mit Neutralisationsmittel im Neutralisator mittels einer Flüssigmedium-Zuführungsvorrichtung einstellbar ist.

Bei dem erfindungsgemäßen Neutralisator läßt sich dadurch auf einfache Weise der Neutralisationsgrad des flüssigen Mediums, welches neutralisiert werden soll, einstellen.

Dies wird vorteilhafterweise dadurch erreicht, daß durch die Flüssigmedium-Zuführungsvorrichtung ein Flüssigkeitsspiegel an flüssigem Medium in dem Behälter, in welchem das Neutralisationsmittel im Neutralisator angeordnet ist, einstellbar ist. Dadurch ist steuerbar, wieviel Neutralisationsmittel das flüssige Medium im Neutralisator aufnehmen soll.

Besonders günstig ist es, wenn die Flüssigmedium-Zuführungsvorrichtung eine Zuführung umfaßt, welche bezüglich der Anordnung des Neutralisationsmittels im Neutralisator in der Höhe verschieblich ist. Dadurch läßt sich mittels einer Verschiebung der Zuführung der Flüssigkeitsspiegel in dem Behälter des Neutralisators und damit die Beaufschlagung des Zwischenträgermediums mit Neutralisationsmittel steuern.

Um den Neutralisationsgrad des flüssigen Mediums, welches durch den Neutralisator geführt ist, in einem weiten Bereich einstellen zu können, ist es vorteilhaft, wenn die Zuführung bezogen auf die Schwerkraftrichtung an einem oberen Ende des Behälters mit Neutralisationsmittel in diesen geführt wird. Auf diese Weise kann der Behälter in seiner ganzen Höhe zur Einstellung benutzt werden.

Es ist dann insbesondere vorteilhaft, wenn die Zuführung in einen Bereich, welcher ein bezogen auf die Schwerkraftrichtung unteres Ende eines Vorrats an Neutralisationsmittel in dem Behälter und ein oberes Ende des Behälters umfaßt, verschieblich ist, so daß dieser gesamte Bereich genutzt werden kann und damit ein weiter Bereich bezüglich des Neutralisationsgrades einstellbar ist.

In einer günstigen Variante einer Ausführungsform weist der Behälter mit Neutralisationsmittel an seinem unteren Ende eine Abführung für das flüssige Medium auf. Dadurch ergibt sich insbesondere der Vorteil, daß wenn die Zuführung so eingestellt wird, daß sie an der Abführung ansteht, das Zwischenträgermedium durch den Neutralisator geführt werden kann, ohne in Kontakt mit dem Neutralisationsmittel zu stehen.

Um einen Verbrauch an Neutralisationsmittel auszugleichen, weist der Behälter vorteilhafterweise an oder in der Nähe seines oberen Endes eine Nachfüllvorrichtung für Neutralisationsmittel auf.

Eine Steuerung des Neutralisationsgrades des flüssigen Mediums in einem weiteren Bereich läßt sich dadurch erreichen, daß das Neutralisationsmittel als Granulat vorliegt. Dadurch weist dieses eine durch das flüssige Medium benetzbare große Oberfläche auf. Dadurch läßt sich insbesondere der Behälterumfang gering halten und der Neutralisator kann damit an die Strömungsverhältnisse des flüssigen Mediums in einem Kreislauf, in dem der Neutralisator angeordnet ist, anpassen, so daß er insbesondere keinen zu großen Strömungswiderstand darstellt.

Günstigerweise ist ein Durchmesser des Behälters mit Neutralisationsmittel und ein Durchmesser der Abführung für flüssiges Medium so angepaßt, daß flüssiges Medium ohne Rückstau durch den Neutralisator strömbar ist.

In der Zeichnung zeigen:
- Fig. 1: ein Ausführungsbeispiel einer erfindungsgemäßen Vorrichtung;
- Fig. 2: ein Ausführungsbeispiel einer Abgasreinigungs-Wärmetausch-Einneit;
- Fig. 3: ein Ausführungsbeispiel eines erfindungsgemäßen Neutralisators und
- Fig. 4: ein weiteres Ausführungsbeispiel einer erfindungsgemäßen Vorrichtung.

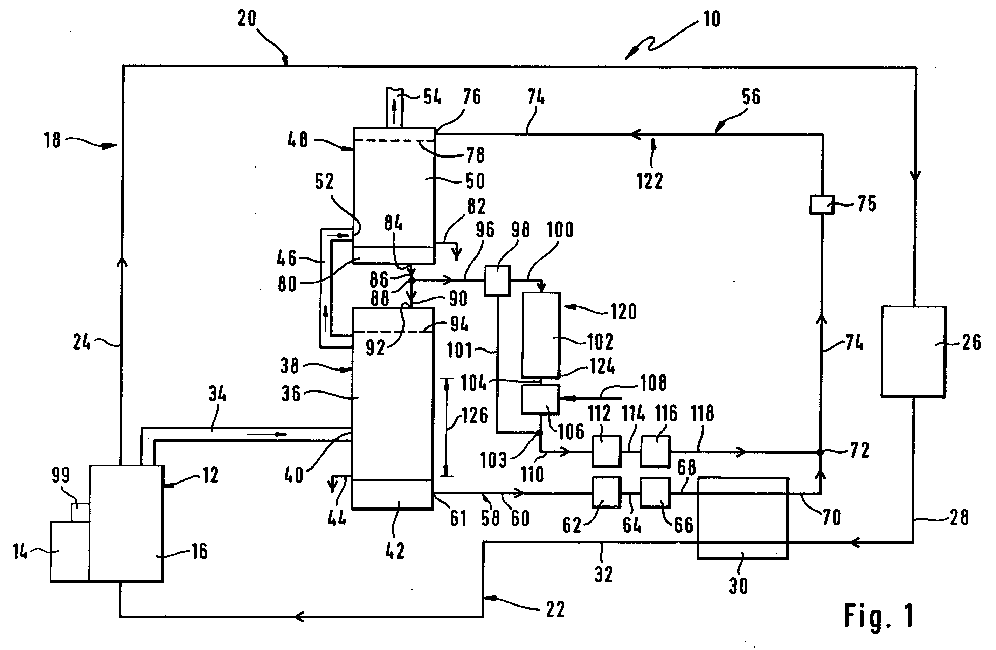

Ein Ausführungsbeispiel einer erfindungsgemäßen Vorrichtung, welche in Fig. 1 als Ganzes mit 10 bezeichnet ist, umfaßt eine Feuerungsanlage 12 mit einem Brenner 14 und einem Heizkessel 16. Der Brenner, der überwiegend mit fossilen Brennstoffen und insbesondere Öl betrieben wird, heizt Wasser in einem Heizkreis 18 auf.

Der Heizkreis 18 umfaßt einen Heizwasser-Vorlauf 20 und einen Heizwasser-Rücklauf 22. Der Heizwasser-Vorlauf 20 ist durch eine Leitung 24 von dem Heizkessel zu einer Heizkörperanordnung 26 gebildet. Der Heizwasser-Rücklauf 22 umfaßt eine Leitung 28 von der Heizkörperanordnung 26 zu einem Eingang eines Zwischenträgermedium-Heizwasser-Wärmetauschers 30 und eine Leitung 32 von einem Ausgang dieses Wärmetauschers zu dem Heizkessel 16.

Von dem Heizkessel 16 führt eine Abgasleitung 34 für bei der Verbrennung entstandenes Abgas in einen Wärmetauschraum 36 eines Restwärmetauschers 38. Ein Eintritt 40 der Abgasleitung 34 ist dabei oberhalb eines Kondensatsumpfes 42, in welchem sich durch Abgaskondensat gebildetes Zwischenträgermedium ansammelt, angeordnet.

In der Variante eines Ausführungsbeispiels, die in Fig. 1 gezeigt ist, mündet die Abgasleitung 34 in einen unteren Bereich des Wärmetauschraums 36, so daß das Abgas den Wärmetauschraum 36 entgegen der Schwerkraftrichtung nach oben durchströmen kann. In einer alternativen Ausführungsform (in der Figur nicht gezeigt) mündet die Abgasleitung in einen oberen Bereich des Wärmetauschraums, wobei dann das Abgas in Schwerkraftrichtung den Wärmetauschraum 36 durchströmt.

Oberhalb eines Flüssigkeitsspiegels des Kondensatsumpfes 42 weist der Restwärmetauscher 38 einen Überlauf 44 für Zwischenträgermedium auf, mittels dem Zwischenträgermedium abgeführt und ein Flüssigkeitspegel des Kondensatsumpfes 42 konstant gehalten werden kann. Bevorzugterweise ist der Eintritt 40 für die Abgasleitung 34 oberhalb des Überlaufs 44 angeordnet.

An seinem oberen Ende weist der Restwärmetauscher 38 eine Abgasabführung 46 zum Abführen von Abgas, welches zum Wärmetausch mit dem Zwischenträgermedium den Wärmetauschraum 36 des Restwärmetauschers 38 durchströmt hat, auf.

Die Abgasabführung 46 führt zu einem Abgasreinigungsreaktor 48. Dieser weist einen Abgasreinigungsraum 50 auf, den das über die Abgasabführung 46 vom Restwärmetauscher 38 kommende Abgas zur Reinigung und insbesondere Entschwefelung mittels des Zwischenträgermediums durchläuft. Dazu ist bevorzugterweise ein Eintritt 52 der Abgasabführung 46 in den Abgasreinigungsreaktor 48 an einem unteren Ende des Abgasreinigungsraums 50 angeordnet, so daß das Abgas entgegen der Schwerkraftrichtung den Abgasreinigungsraum 50 durchströmen kann.

Der Abgasreinigungsreaktor 48 weist an oder in der Nähe seines oberen Endes eine Abgasabführung 54 auf, mittels der gereinigtes Abgas zu einem Schornstein (in der Figur nicht gezeigt) geführt wird. Die Abgasabführung 54 ist in einer Variante eines Ausführungsbeispiels so angeordnet, daß abströmendes gereinigtes Abgas mittels heißem Abgas, welches über die Abgasleitung 34 von der Feuerungsanlage 12 kommt, nacherwärmbar ist, um dadurch ein Durchnässen des Schornsteins zu vermeiden. Alternativ kann es vorgesehen sein, daß in der Abgasabführung 54 Drahtsiebe (in der Figur nicht gezeigt) zum Abscheiden von Restwasser aus dem Abgas eingesetzt sind.

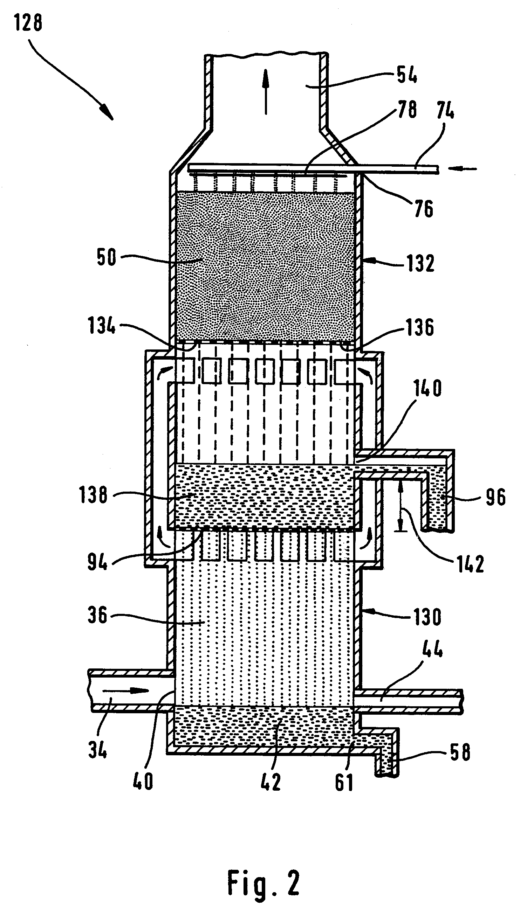

In einer Variante einer Ausführungsform bilden der Restwärmetauscher und der Abgasreinigungsreaktor eine AbgasreinigungsWärmetausch-Einheit (Fig. 2). Diese wird untenstehend beschrieben.

Das Zwischenträgermedium ist in einem Zwischenträgermedium-Umlauf 56 zur Reinigung des Abgases und zur Aufnahme von Restwärme aus dem Abgas geführt. Dazu umfaßt der Zwischenträgermedium-Umlauf 56 einen ersten Kreislauf 58, in dem das Zwischenträgermedium durch den Restwärmetauscher 38 zur Aufnahme von Wärme aus dem Abgas geführt ist.

Der erste Kreislauf 58 umfaßt eine Leitung 60, welche von einem Austritt 61 im Kondensatsumpf 42 des Restwärmetauschers 38 zu einem Eingang einer Pumpe 62 führt. Von einem Ausgang der Pumpe 62 führt eine Leitung 64 zu einem Eingang eines Massestrom-Steuerorgans 66, mittels dem der Massestrom an Zwischenträgermedium in dem ersten Kreislauf 58 steuerbar ist. Von einem Ausgang des Massestrom-Steuerorgans 66 führt eine weitere Leitung 68 zu einem Eingang des Zwischenträgermedium-Heizwasser-Wärmetauschers 30, und eine weitere Leitung 70 führt von einem Ausgang dieses Wärmetauschers zu einem ersten Eingang einer Zusammenführung 72.

Von dieser Zusammenführung 72 führt eine weitere Leitung 74 zu dem Abgasreinigungsreaktor 48 und mündet dort über einen Eintritt 76 in einen oberen Bereich des Abgasreinigungsreaktors 48. In der Leitung 74 ist eine pH-Meßvorrichtung 75 zur Bestimmung des pH-Werts des Zwischenträgermediums angeordnet.

Das Zwischenträgermedium ist von dem Eintritt 76 zu einem Verteiler 78 geführt, welcher in der Nähe eines oberen Endes des Abgasreinigungsreaktors 48 angeordnet ist. Der Verteiler 78 dient zur Feinverteilung und insbesondere zur Tropfendispergierung des im Abgasreinigungsreaktor 48 als Reinigungsmedium wirkenden Zwischenträgermediums, um eine große Kontaktoberfläche zwischen dem Reinigungsmedium und dem den Abgasreinigungsreaktor 48 durchströmenden und zu reinigenden Abgas zu ermöglichen.

In seinem unteren Bereich weist der Abgasreinigungsreaktor 48 einen Kondensatsumpf 80 auf, in dem sich Zwischenträgermedium, welches durch ein Abgaskondensat gebildet ist, sammelt. Mittels eines Überlaufs 82 kann der Flüssigkeitsspiegel im Kondensatsumpf 80 konstant gehalten werden.

Zur Erhöhung der Kontaktfläche zwischen dem Abgas, das den Abgasreinigungsraum 50 in Gegenrichtung zur Fließrichtung des Zwischenträgermediums durchströmt, und zur Erhöhung der Kontaktzeit zwischen dem Abgas und dem Zwischenträgermedium sind im Abgasreinigungsraum 50 Fließelemente angeordnet (in der Figur nicht gezeigt), bei denen es sich beispielsweise um mit Öffnungen versehene Lochplatten handeln kann oder um Formkörper, wie Raschigringe oder Drahtformkörper oder keramische Formkörper.

Von einem unteren Ende des Abgasreinigungsreaktors führt über einen Austritt 84 im Kondensatsumpf 82 eine Leitung 86 für Zwischenträgermedium zu einem Eingang einer Abzweigung 88. Von einem ersten Ausgang der Abzweigung 88 führt eine weitere Leitung 90 zu dem Restwärmetauscher 38 und mündet über einen Eintritt 92 in einen oberen Bereich von diesem.

Der Restwärmetauscher 38 weist einen Verteiler 94 auf, der zur Dispergierung des Zwischenträgermediums in Tropfen dient. Bevorzugterweise erzeugt der Verteiler 94 eine monodisperse Tropfenverteilung, so daß es sich bei dem Restwärmetauscher 38 um einen Monodispers-Restwärmetauscher handelt. Der Verteiler 94 ist vorzugsweise zwischen einem Austritt der Abgasabführung 46 und dem Eintritt 92 für Zwischenträgermedium in den Restwärmetauscher 38 angeordnet.

Über den Wärmetauschraum 36 und den Kondensatsumpf 42 ist der erste Kreislauf 58 geschlossen.

Von einem zweiten Ausgang der Abzweigung 88 führt eine Leitung 96 zu einem Eingang eines Steuerventils 98, welches insbesondere als Sperrventil ausgebildet ist. Das Steuerventil ist durch eine Steuerungs- und Regelungseinheit 99 steuerbar, welche insbesondere den Betrieb des Brenners 14 steuert.

Bei einer Variante eines Ausführungsbeispiels ist das Steuerventil 98 ein Dreiwegeventil.

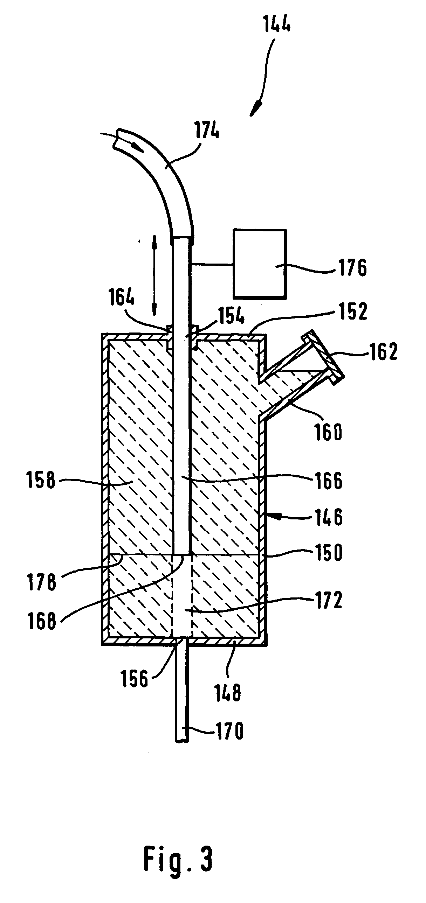

Von einem Ausgang des Steuerventils 98 führt eine weitere Leitung 100 zu einem Eingang eines Neutralisators 102. Ein Ausführungsbeispiel eines erfindungsgemäßen Neutralisators (Fig. 3) ist untenstehend beschrieben.

Von einem Ausgang des Neutralisators 102 führt bei der in der Figur gezeigten Variante eines Ausführungsbeispieles eine Leitung 104 zu einem Eingang eines Luftinjektors 106. Dieser weist eine Zuführungsleitung 108 für Luft auf.

Von einem Ausgang des Luftinjektors 106 führt eine Leitung 110 für Zwischenträgermedium zu einem Eingang einer Pumpe 112, und eine weitere Leitung 114 führt von einer Ausgangs-Seite der Pumpe zu einem Massestrom-Steuerorgan 116, mit welchem der Massestrom des Zwischenträgermediums steuerbar ist. Eine Leitung 118 führt von dem Massestrom-Steuerorgan 116 zu einem zweiten Eingang der Zusammenführung 72. Durch die Zwischenträgermediumführung zwischen der Abzweigung 88 durch den Neutralisator 102 zur Zusammenführung 72 und über die Leitung 74 und die Führung des Zwischenträgermediums durch den Abgasreinigungsreaktor 48 ist ein zweiter Kreislauf 120 für das Zwischenträgermedium gebildet. In dem zweiten Kreislauf 120 wirkt das Zwischenträgermedium ausschließlich als Reinigungsmedium für das Abgas.

Bei der Variante, bei der das Steuerventil 98 ein Dreiwegeventil ist, führt die Leitung 100 aus einem ersten Ausgang dieses Dreiwegeventils und eine Leitung 101 führt von einem zweiten Ausgang unter Überbrückung des Neutralisators 102 in eine Zusammenführung 103, welche in der Leitung 110 angeordnet ist.

Eine Führungsstrecke 122, welche in Zwischenträgermedium-Strömungsrichtung (in der Figur mit Pfeilen gekennzeichnet) zwischen der Zusammenführung 72 und der Abzweigung 88 gebildet ist, ist dem ersten Kreislauf 58 und dem zweiten Kreislauf 120 gemeinsam.

Die Führung des Zwischenträgermediums im ersten Kreislauf 58 dient in erster Linie zur Aufnahme von Restwärme im Wärmetauschraum 36 des Restwärmetauschers 38 und zur Abgabe dieser Wärme an das Heizwasser im Zwischenträgermedium-Heizwasser-Wärmetauscher 30; die Führung des Zwischenträgermediums, welches dann als Reinigungsmedium wirkt, im zweiten Kreislauf 120 dient zur Reinigung des Abgases, wobei im wesentlichen keine Wärme aufgenommen wird.

Die Masseströme des Zwischenträgermediums im ersten Kreislauf 58 und im zweiten Kreislauf 120 des Zwischenträgerumlaufs 56 lassen sich über die Massestrom-Steuerorgane 66 und 116 so anpassen, daß eine optimale Wärmegewinnung aus dem Abgas bei optimaler Reinigung des Abgases erreicht ist.

Der Neutralisator 102 ist bezüglich seines unteren Endes 124 auf einem höheren Gravitationspotential 126 gegenüber dem Überlauf 44 des Kondensatsumpfes 42 des Restwärmetauschers 38 angeordnet, so daß der Neutralisator 102 sich von Zwischenträgermedium entleeren und das Neutralisationsmittel von Zwischenträgermedium trockenfallen kann, insbesondere wenn keine Zirkulation des Zwischenträgermediums im Zwischenträgermedium-Umlauf 56 stattfindet.

Bei einer Variante eines Ausführungsbeispiels (Fig. 2) ist der Restwärmetauscher und der Abgasreinigungsreaktor zu einer Abgasreinigungs-Wärmetausch-Einheit 128 zusammengefaßt. Diese Abgasreinigungs-Wärmetausch-Einheit 128 weist einen Restwärmetauscher 130 auf und einen Abgasreinigungsreaktor 132, welcher bezogen auf die Schwerkraftrichtung oberhalb des Restwärmetauschers 130 angeordnet ist. Der Abgasreinigungsreaktor 132 sowie der Restwärmetauscher 130 sind grundsätzlich so aufgebaut wie oben für den Restwärmetauscher 38 und den Abgasreinigungsreaktor 48 beschrieben, wobei der Restwärmetauscher 130 und der Abgasreinigungsreaktor 132 miteinander verbunden sind.

Dazu weist der Abgasreinigungsreaktor 132 an einem unteren Ende des Abgasreinigungsraums 50 ein Durchströmelement 134 für Zwischenträgermedium auf, das mit einer Vielzahl von Öffnungen 136 versehen ist, so daß Zwischenträgermedium dem Verteiler 94 des Restwärmetauschers 130 zuströmen kann.

In seinem unteren Bereich weist der Abgasreinigungsreaktor 132 einen Sammelbereich 138 für Zwischenträgermedium auf, der einem Kondensatsumpf entspricht. Über einen Austritt 140 kann Zwischenträgermedium aus dem Sammelbereich 138 in die Leitung 96 strömen.

Das sich im Sammelbereich 138 befindende Zwischenträgermedium steht an dem Verteiler 94 des Restwärmetauschers 130 an. Der Austritt 140 ist dabei bezogen auf die Schwerkraftrichtung in einer vorgegebenen Höhe 142 über dem Verteiler 94 angeordnet. Der Sammelbereich 138 mit Austritt 140 wirkt dadurch als Abzweigung, mittels dem ein Teilstrom über den Austritt 140 in die Leitung 96 zur Beförderung in dem zweiten Kreislauf 120 abzweigbar ist und mittels dem Zwischenträgermedium dem Restwärmetauscher 130 zur Beförderung in dem ersten Kreislauf 58 zuführbar ist. Die Aufteilung in einen ersten und einen zweiten Teilstrom wird dabei durch die vertikale Höhe 142 sowie durch die Anzahl und durch den Durchmesser von Bohrungen in dem Verteiler 94, welcher insbesondere als Düsenplatte ausgebildet ist, bestimmt.

Die erfindungsgemäße Vorrichtung arbeitet wie folgt:

Das bei der Verbrennung der Brennstoffe in dem Heizkessel 16 entstandene Abgas wird über die Abgasleitung 34 in den Restwärmetauscher 38 (bzw. 130) geführt und durchströmt dessen Wärmetauschraum 36 in Gegenrichtung zur Zwischenträgermediumströmung.

Das Zwischenträgermedium, das über den Eintritt 92 in den Restwärmetauscher 36 eintritt, wird durch den Verteiler 94 in monodisperse Tropfen dispergiert. Der Zerfall eines Zwischenträgermediumstrahls im Tropfen tritt dabei nach Durchfallen einer Zerfallslänge auf. Dieser Tropfenzerfall in einem Monodispers-Restwärmetauscher ist in den nicht vorveröffentlichten deutschen Patentanmeldungen mit den Aktenzeichen 195 43 452.8-16 und 195 43 449.8-16 der gleichen Anmelderin beschrieben. Auf diese Anmeldungen wird hiermit ausdrücklich Bezug genommen.

Bevorzugterweise ist die mittlere Tropfengröße im zerfallenen Strahl so, daß keine Tropfen mittels des Abgases aus dem Restwärmetauscher 38 herausgerissen werden.

Unmittelbar nach Eintritt des heißen Abgases aus der Abgasleitung 34 in den Wärmetauschraum 36 kommt das Abgas in Kontakt mit den Tropfen des monodispersen Zwischenträgermediumsprays, und Wasser aus dem Abgas schlägt sich an den Tropfen des Zwischenträgermediums nieder. Dabei wird fühlbare und latente Wärme gewonnen. Das Abgas, welches Restwärme an das Zwischenträgermedium abgegeben hat, wird zur Reinigung dem Abgasreinigungsreaktor 48 zugeführt.

Im Zwischenträgermedium-Heizwasser-Wärmetauscher 30 gibt das Zwischenträgermedium die aufgenommene Wärme nahezu vollständig an das Heizwasser im Heizwasserrücklauf 22 ab. Die vom Zwischenträgermedium im Restwärmetauscher 38 aufgenommene Wärme bewirkt dabei eine Temperaturerhöhung im Bereich von etwa 5 K bis 20 K.

Das Zwischenträgermedium wird über die Führungsstrecke 122 durch den Abgasreinigungsreaktor 48 und die Abzweigung 88 in den Restwärmetauscher 38 geführt und zirkuliert auf diese Weise in dem dadurch gebildeten ersten Zwischenträgermedium-Kreislauf 56.

Das Abgas der Feuerungsanlage 12 enthält Verunreinigungen und Schadstoffe und aufgrund des Schwefelgehalts in den fossilen Brennstoffen insbesondere Schwefeldioxid und andere Schwefelverbindungen. Diese Schwefelverbindungen werden in dem Zwischenträgermedium gelöst und bewirken ein Versauern des Zwischenträgermediums.

Durch den Kontakt des Abgases mit Zwischenträgermedium im Wärmetauschraum 36 wird ein Teil des Schwefeldioxids aus dem Abgas ausgewaschen. Der wesentliche Schritt der Abgasreinigung findet jedoch im Abgasreinigungsreaktor 48 statt. Dazu sind die Masseströme des Zwischenträgermediums im ersten Kreislauf 56 und im zweiten Kreislauf 120 so angepaßt, daß sich jeweils ein optimierter Wärmetausch in dem Restwärmetauscher und eine optimierte Abgasreinigung in dem Abgasreinigungsreaktor 48 ergibt. Dazu wird im ersten Kreislauf 56 der Massestrom über das Massestrom-Steuerorgan 66 und im zweiten Kreislauf 120 der Massestrom über das Massesteuerorgan 116 gesteuert. Der Massestrom wird bevorzugterweise so gewählt, daß er im zweiten Kreislauf 120 um das 2,8-fache bis 25-fache und insbesondere um das ca. 7-fache höher ist als der Massestrom im ersten Kreislauf 58. Durch ein derart gewähltes Massestromverhältnis ist gewährleistet, daß einerseits ein Abgasreinigungsgrad und insbesondere Entschwefelungsgrad von 99 % und mehr erreicht wird und andererseits das Zwischenträgermedium im Restwärmetauscher 38 die Rest-Wärme des Abgases 34 der Feuerungsanlage 12 auf optimierte Weise aufnehmen und über den Zwischenträgermedium-Heizwasser-Wärmetauscher 30 an das Heizwasser im Heizwasserrücklauf 22 abgeben kann.

Zur Abgasreinigung wird das Abgas, das den Restwärmetauscher 38 durchströmt hat, dem Abgasreinigungsreaktor 48 zugeführt, und dort wird das im Abgas noch enthaltene Schwefeldioxid durch das Zwischenträgermedium größtenteils ausgewaschen. Dadurch versauert das Zwischenträgermedium weiter.

Über die Leitung 96 wird von der Abzweigung 88 das Zwischenträgermedium dem Neutralisator 102 zugeführt. In dem Neutralisator ist ein Neutralisationsmittel, insbesondere ein Alkali- oder Erdalkalimetalloxid wie MgO oder CaO angeordnet. In einer wässrigen Lösung bildet dieses Metalloxid eine Hydroxid-Wasser-Lösung, beispielsweise bei MgO als Neutralisationsmittel eine Mg(OH)₂-Wasser-Lösung. Durch das Schwefeldioxid bilden sich in dieser Lösung Metallsulfationen, beispielsweise MgSO₄-Ionen, welche sich im Zwischenträgermedium lösen und durch die Zwischenträgermedium-Zirkulation im Zwischenträgermedium-Umlauf 56 mit diesem zirkulieren. Nach mehreren Umläufen wird das angereicherte Zwischenträgermedium abgeführt.

Um ein Ausfallen von festem Metalloxid oder Metallhydroxid, welches zu Ablagerungen insbesondere an kritischen Durchlaßstellen der Vorrichtung und in der Folge zu Funktions-Störungen führen kann, zu verhindern, wird auf einen pH-Wert des Zwischenträgermediums im Bereich von 5,5 bis 7 und insbesondere auf einen pH-Wert von 6,5 neutralisiert, um eine Verschiebung des Gleichgewichts in den basischen Bereich mit der Folge des Ausfallens von Metalloxid oder Metallhydroxid aus dem Zwischenträgermedium zu verhindern.

In einer Variante eines Ausführungsbeispiels durchläuft das Zwischenträgermedium einen dem Neutralisator 102 nachgeordneten Luftinjektor 106. Dieser dient der Oxidation von in dem Zwischenträgermedium gelösten Sulfit-Ionen zu ungiftigen Sulfat-Ionen mittels Luft. Dies ist jedoch nur dann notwendig, wenn die Luftzahl der Verbrennung im Brenner 14 nahe bei dem stöchiometrischen Wert liegt; das Abgas enthält bei Luftzahlen mit einem Abstand zum stöchiometrischen Wert noch genügend Sauerstoff zur Oxidation von Sulfit in Sulfat.

Über die Zusammenführung 72 zirkuliert das Zwischenträgermedium über die Führungsstrecke 122 in dem zweiten Zwischenträgermedium-Kreislauf 120.

Bei bisherigen aus dem Stand der Technik bekannten Vorrichtungen trat das Problem auf, daß bei Nichtbetätigung des Brenners und/oder bei Stillstand der Zwischenträgermedium-Zirkulation weiterhin sich Zwischenträgermedium im Neutralisator befand und weiter mit Neutralisationsmittel beaufschlagt wurde. Dadurch konnte sich der pH-Wert in den basischen Bereich erhöhen und aufgrund der Verschiebung des Lösungsgleichgewichts fiel Metalloxid oder Metallhydroxid aus.

Bei dem erfindungsgemäßen Verfahren ist der Neutralisator auf einem höheren Gravitationspotential 126 gegenüber dem Überlauf 44 angeordnet. Bei Stillstand der Zwischenträgermedium-Zirkulation kann dadurch Zwischenträgermedium aus dem Neutralisator 102 über den Überlauf 44 abfließen, so daß der Neutralisator 102 trockenfällt und kein Zwischenträgermedium an dem Neutralisationsmittel ansteht. Dadurch wird erreicht, daß sich der pH-Wert des Zwischenträgermediums in dem Zwischenträgermedium-Umlauf 56 bei jedem Betriebszustand nicht in einen basischen Bereich verschiebt, sondern in einem leicht sauren Bereich liegt oder neutral ist. Dies verhindert Funktionsstörungen hervorrufende Ablagerungen.

Durch den Überlauf 44 wird mit Metallsulfat angereichertes Zwischenträgermedium abgeführt. Die Metallsulfatkonzentration ist im wesentlichen die gleiche wie beim Zwischenträgermedium im Zwischenträgermedium-Umlauf, da dieses bei der Zirkulation gut durchmischt und durchgerührt wird.

Es ist beispielsweise vorgesehen, daß dieses insbesondere nach Verdünnung mit Wasser der Kanalisation zugeführt wird oder gesammelt wird. Bei der Neutralisation entstandenes Magnesiumsulfat ("Bittersalz") läßt sich als Dünger vornehmlich für Nadelhölzer einsetzen. Es kann erfindungsgemäß auch vorgesehen sein, daß abgeführtes Zwischenträgermedium einem Sulfatabscheider zugeleitet wird, in dem durch Zugabe von beispielsweise CaO, Kalkmilch oder Ca(OH)₂ unlösliches Kalziumsulfat (Gips) gebildet wird. Dadurch gelangt kein oder erheblich weniger Sulfat in die Kanalisation.

Das Zwischenträgermedium fließt dabei insbesondere verstärkt dann ab, wenn die Zwischenträgermedium-Zirkulation stillsteht, da aus höher gelegenen Bereichen Zwischenträgermedium in den Kondensatsumpf 42 läuft und dessen Spiegel sich über den Überlauf 44 hebt.

In einer Variante eines Ausführungsbeispiels des erfindungsgemäßen Verfahrens ist es vorgesehen, daß bei Stillstand des Brenners 14 das Sperrventil 98 geschlossen wird, so daß in dem zweiten Kreislauf 120 kein Zwischenträgermedium mehr umläuft. Auf diese Weise wird das Zwischenträgermedium von dem Neutralisationsmittel abgekoppelt. Es läßt sich aber noch die durch das Zwischenträgermedium in dem ersten Kreislauf aufgenommene Wärme nutzen, indem dieses den Zwischenträgermedium-Heizwasser-Wärmetauscher 30 noch in mindestens einem Zirkulationsumlauf durchlaufen kann.

In einer weiteren Variante eines Ausführungsbeispiels ist es vorgesehen, daß das Steuerventil 98 eine bestimmte Zeitspanne vor dem Abschalten des Brenners 14 geschlossen wird. Dazu übermittelt die Steuerungs- und Regelungseinheit 99 ein Schließsignal an das Steuerventil 98, bevor der Brenner 14 abgeschaltet wird.

Durch Schließen des Steuerventils 98 ist das im ersten Kreislauf 58 umlaufende Zwischenträgermedium nicht weiter mit Neutralisationsmittel beaufschlagt, und es wird ein leicht saurer Zustand des Zwischenträgermediums dadurch erreicht, daß in der Zeitspanne zwischen Sperren des zweiten Kreislaufs 120 und Brennerstillstand weiter Schwefeldioxid ausgewaschen wird.

Durch Abstimmung der Verzögerungszeit zwischen Schließen des Steuerventils 98 und Anhalten des Brenners 14 kann erreicht werden, daß die gesamte umlaufende Zwischenträgermedium-Masse einen leicht sauren Zustand hat, wenn der Umlauf des Zwischenträgermediums im zweiten Kreislauf 120 nach Übertragung der aufgenommenen Wärme abgeschaltet wird.

Das erfindungsgemäße Verfahren läuft auf die gleiche Weise wie oben beschrieben, wenn die Abgasreinigungs-Wärmetausch-Einheit 128 anstatt getrenntem Restwärmetauscher und Abgasreinigungsreaktor zum Einsatz kommt.

Bei der Variante eines Ausführungsbeispiels, bei der das Steuerventil 98 ein Dreiwegeventil ist, ist es vorgesehen, während einer insbesonderen kurzen Stillstandsphase des Brenners 14 den Neutralisator 102 nicht trockenfallen zu lassen. Die dadurch eintretende Überneutralisierung des Zwischenträgermediums wird bei erneutem Brennerstart dadurch kompensiert, daß saures Zwischenträgermedium von dem Steuerventil 98 abgezweigt und durch die Leitung 101 unter Überbrückung des Neutralisators 102 in die Zusammenführung 103 geführt wird. Der abgezweigte Anteil wird dabei über den durch die pH-Meßvorrichtung 75 gemessenen pH-Wert im Zwischenträgermedium gesteuert. Auf diese Weise läßt sich das überneutralisierte Zwischenträgermedium aus dem Neutralisator 102 abführen und verbrauchen.

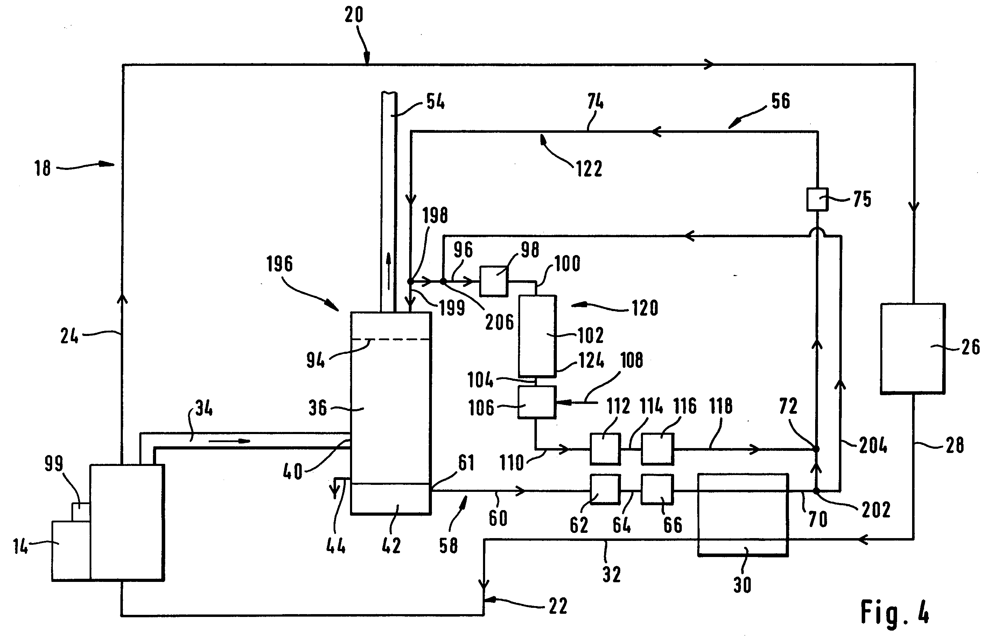

Bei einer weiteren Variante einer Ausführungsform der erfindungsgemäßen Vorrichtung ist es vorgesehen, daß die Abgasreinigung und der Restwärmetauscher mit dem Abgas in einem Restwärmetauscher 196 erfolgt (Fig. 4). Der erste Kreislauf 122 und der zweite Kreislauf 120 sind dabei im wesentlichen wie oben beschrieben aufgebaut.

Die Leitung 74 mündet dann in einem Eingang einer Abzweigung 198 und von einem ersten Ausgang dieser Abzweigung 198 mündet eine Leitung 199 in den Restwärmetauscher 196.

Von einem zweiten Ausgang der Abzweigung 198 führt die Leitung 96 zu dem Steuerventil 98, wobei in der Leitung 96 eine Zusammenführung 206 angeordnet ist, in deren zweiten Eingang eine Leitung 204 mündet. Diese Leitung 204 liegt zwischen einem zweiten Ausgang einer Abzweigung 202, deren erster Ausgang mit der Zusammenführung 72 verbunden ist und deren Eingang über die Leitung 70 mit dem Ausgang des Zwischenträgermedium-Heizwasser-Wärmetauschers 30 verbunden ist.

Das Zwischenträgermedium wird bei dieser Variante im Restwärmetauscher 196 gereinigt und nimmt Wärme auf. Vor Einströmen in den Restwärmetauscher 196 wird über die Abzweigung 198 ein Teil des Zwischenträgermediums in den zweiten Kreislauf 122 abgezweigt, um es zu neutralisieren. Durch Führung eines Teils von Zwischenträgermedium aus dem ersten Kreislauf 122 über die Abzweigung 202, die Leitung 204 und die Zusammenführung 206 in den zweite Kreislauf 120 wird der Neutralisationsgrad erhöht, da ein Teil des direkt aus dem Restwärmetauscher kommenden sauren Abgaskondensats direkt in den zweiten Kreislauf 120 mit dem Neutralisator 102 geführt wird.

Ein Ausführungsbeispiel eines erfindungsgemäßen Neutralisators, welcher in Fig. 3 als Ganzes mit 144 bezeichnet ist, umfaßt einen Behälter 146 mit Behälterboden 148, Behälterwänden 150 und Behälterdeckel 152. In dem Behälterdeckel 152 ist eine Öffnung 154 bevorzugterweise zentral angeordnet, über welche ein flüssiges Medium, beispielsweise Zwischenträgermedium, in das Innere des Behälters führbar ist. Der Behälterboden 148 weist eine Öffnung 156 auf, mittels welcher das flüssige Medium aus dem Behälter 146 des Neutralisators abführbar ist.

Im Inneren des Behälters 146 ist ein Neutralisationsmittel 158 angeordnet, welches bevorzugterweise in Granulatform vorliegt. Dabei kann es sich insbesondere um ein Alkali- oder Erdalkalioxid wie MgO oder CaO handeln, die eingesetzt werden zur Neutralisierung eines Zwischenträgermediums, welches durch Auswaschung von Schwefeldioxid aus einem Abgas versauert ist.

In der Nähe seines oberen Endes weist der Behälter 146 einen Nachfüllstutzen 160 mit einem verschließbaren Deckel 162 auf, über den Neutralisationsmittel nachfüllbar ist.

An der Öffnung 154 sitzt eine Führung 164 für ein in axialer Höhe verschiebliches Rohr 166, durch das flüssiges Medium in das Innere des Behälters 146 des Neutralisators 144 führbar ist. Ein unteres Ende 168 des Rohres 166, welches in den Behälter 146 mündet, ist dabei von einem oberen Ende des Behälterbodens 148 bis zu einem unteren Ende des Behälterdeckels 152 verschieblich.

Bevorzugterweise ist die Rohrführung so ausgebildet, daß das untere Ende 168, wenn es an dem oberen Ende des Behälterbodens 148 ansteht, direkt in die Öffnung 156, über welche eine Abführleitung 170 für flüssiges Medium aus dem Neutralisator austritt, anliegt. Dadurch kann flüssiges Medium direkt durch den Neutralisator 144 geführt werden, ohne daß dieses mit dem Neutralisationsmittel 158 in Kontakt kommt.

Um die Verschieblichkeit des Rohres 166 zu gewährleisten, ist das Neutralisationsmittel 158 vorzugsweise so im Behälterinneren angeordnet, daß eine röhrenförmige neutralisationsmittelfreie Aussparung 172 für die Verschiebung des Rohrs 166 vorhanden ist.

Das Rohr 166 ist seinem oberen Ende mit einer flexiblen Zuführung 174, beispielsweise einem Schlauch, verbunden, über die das flüssige Medium zugeführt wird und welche gewährleistet, daß das Rohr 166 verschieblich ist.

In einer Variante einer Ausführungsform ist es vorgesehen, daß ein Schrittmotor 176 die axiale Verschiebung des Rohres 166 steuert.

Der erfindungsgemäße Neutralisator funktioniert wie folgt:

Durch das Rohr 166 wird flüssiges Medium, insbesondere Zwischenträgermedium, in den Neutralisator 144 eingeleitet. Der vertikale Abstand des unteren Endes 168 des Rohres zu dem Behälterboden 148 bestimmt dabei, in welchem Umfang Neutralisationsmittel durch das flüssige Medium benetzt wird. Die von dem flüssigen Medium aufnehmbare Menge an Neutralisationsmittel ist proportional zur benetzten Fläche von Neutralisationsmittel im Behälter 146, wobei zur Erzielung einer hohen Oberfläche es insbesondere vorteilhaft ist, wenn das Neutralisationsmittel als Granulat vorliegt. Vorteilhafterweise liegt das Neutralisationsmittel als grobkörniges Granulat vor, so daß insbesondere gewährleistet ist, daß ein Flüssigkeitsspiegel 178 an flüssigem Medium im Neutralisator 144 durch Adhäsionskräfte nur unwesentlich über ein Niveau des unteren Endes 168 des Rohres 166 ansteigen kann.

Durch die Verschiebung des Rohrs 166 und damit Verschiebung des Flüssigkeitsspiegels 178 an flüssigem Medium im Neutralisator 144 läßt sich gerade das Maß der benetzten Granulatoberfläche steuern. Insbesondere im Zusammenhang mit der Steuerung einer Fließgeschwindigkeit des flüssigen Mediums durch den Neutralisator läßt sich dann der Neutralisationsgrad im flüssigen Medium steuern bzw. einstellen. Dazu kann beispielsweise in einem Flüssigmedium-Umlauf an einer oder mehreren Stellen der pH-Wert gemessen werden und das Rohr 166 so lange verschoben werden, bis man den gewünschten oder erforderlichen pH-Wert erhält. Das Anheben oder Absenken des Rohrs 166 kann dabei mit dem Schrittmotor 176 erfolgen.

Liegt das Neutralisationsmittel nicht in sehr reiner Form vor, dann tritt bisweilen das Problem auf, daß es verbacken kann, wenn es trocken fällt. Beispielsweise kann MgO-Granulat durch gebildetes CaSO₄ verbacken. Durch das Verbacken bildet sich u.U. ein Gerüst, das das Nachrieseln von Granulat aus Bereichen oberhalb des Flüssigkeitsspiegels 178 zu den mit flüssigem Medium benetzbaren Bereich unterhalb des Flüssigkeitsspiegels 178 behindert.

Durch Anheben des Rohrs 166 mit seinem unteren Ende 168 in den Bereich des verbackenen Granulats wird dieses mit dem flüssigen Medium benetzt und der gewünschte Neutralisationserfolg kann eintreten. Hat das Rohr 166 mit seinem unteren Ende 168 jedoch das untere Ende des Behälterdeckels 152 erreicht, muß Neutralisationsmittel nachgefüllt werden.

Vorzugsweise wird vor dem Nachfüllen der Behälter 158 von den Resten des Neutralisationsmittel gereinigt.

## Patentansprüche

1. Verfahren zur Reinigung eines Abgases einer Feuerungsanlage, insbesondere einer Ölfeuerungsanlage, bei dem das Abgas in einem Restwärmetauscher Restwärme, welche restliche fühlbare und latente Wärme umfaßt, an ein Zwischenträgermedium abgibt und bei dem das Abgas mittels Zwischenträgermedium gereinigt und insbesondere entschwefelt wird, wobei das Zwischenträgermedium in einem Zwischenträgermedium-Umlauf geführt wird und mittels eines Neutralisationsmittels neutralisiert wird, **dadurch gekennzeichnet**, daß das Zwischenträgermedium vom Neutralisationsmittel abgekoppelt wird, wenn Überneutralisierung des Zwischenträgermediums eintreten kann.

2. Verfahren nach Anspruch 1, dadurch gekennzeichnet, daß das Zwischenträgermedium vom Neutralisationsmittel bei Stillstand eines Brenners der Feuerungsanlage abgekoppelt wird.

3. Verfahren nach Anspruch 1 oder 2, dadurch gekennzeichnet, daß das Zwischenträgermedium bei Anhalten einer Zwischenträgermedium-Zirkulation im Zwischenträgermedium-Umlauf vom Neutralisationsmittel abgekoppelt wird.

4. Verfahren nach einem der vorangehenden Ansprüche, dadurch gekennzeichnet, daß das Zwischenträgermedium auf einen pH-Wert im Bereich von 5,5 bis 7, insbesondere auf ca. 6,5, neutralisiert wird.

5. Verfahren nach einem der vorangehenden Ansprüche, dadurch gekennzeichnet, daß als Neutralisationsmittel ein Metalloxid und insbesondere ein Alkali- oder Erdalkalioxid verwendet wird.

6. Verfahren nach Anspruch 5, dadurch gekennzeichnet, daß als Neutralisationsmittel MgO verwendet wird.

7. Verfahren nach einem der vorangehenden Ansprüche, dadurch gekennzeichnet, daß das Neutralisationsmittel in einem Neutralisator angeordnet ist, welcher von dem Zwischenträgermedium durchströmbar ist.

8. Verfahren nach Anspruch 7, dadurch gekennzeichnet, daß die Abkopplung des Zwischenträgermediums vom Neutralisationsmittel durch ein Trockenfallen des Neutralisationsmittels in dem Neutralisator bewirkt wird.

9. Verfahren nach Anspruch 8, dadurch gekennzeichnet, daß der Neutralisator bezogen auf die Schwerkraftrichtung oberhalb einer Abführung für Zwischenträgermedium aus einem Kondensatsumpf des Restwärmetauschers angeordnet ist, so daß durch die Schwerkraft ein Trockenfallen des Neutralisators bewirkbar ist.

10. Verfahren nach einem der vorangehenden Ansprüche, dadurch gekennzeichnet, daß das Neutralisationsmittel als Granulat vorliegt.

11. Verfahren nach Anspruch 10, dadurch gekennzeichnet, daß das Maß der durch das Zwischenträgermedium benetzten Neutralisationsmittel-Oberfläche einstellbar ist.

12. Verfahren nach einem der vorangehenden Ansprüche, dadurch gekennzeichnet, daß der pH-Wert des Zwischenträgermediums an mindestens einer Stelle im Zwischenträgermedium-Umlauf gemessen wird.

13. Verfahren nach Anspruch 12, dadurch gekennzeichnet, daß die durch das Zwischenträgermedium benetzte Neutralisationsmitteloberfläche so eingestellt wird, daß sich der vorgegebene pH-Wert im Zwischenträgermedium einstellt.

14. Verfahren nach einem der vorangehenden Ansprüche, dadurch gekennzeichnet, daß das Zwischenträgermedium ein Abgaskondensat ist.

15. Verfahren nach Anspruch 14, dadurch gekennzeichnet, daß das aus dem Abgas abgeschiedene Kondensat mehrmals im Zwischenträgermedium-Umlauf als Zwischenträgermedium geführt wird, bevor es aus dem Zwischenträgermedium-Umlauf abgeführt wird.

16. Verfahren nach Anspruch 15, dadurch gekennzeichnet, daß das abgeführte Zwischenträgermedium mit Wasser verdünnt wird.

17. Verfahren nach einem der vorangehenden Ansprüche, dadurch gekennzeichnet, daß ein Restwärmetausch des Abgases mit dem Zwischenträgermedium und die Abgasreinigung durch das Zwischenträgermedium im wesentlichen in getrennten Stufen erfolgt.

18. Verfahren nach Anspruch 17, dadurch gekennzeichnet, daß zur Abgasreinigung ein Abgasreinigungsreaktor vorgesehen ist.

19. Verfahren nach Anspruch 17 oder 18, dadurch gekennzeichnet, daß bezogen auf den Abgasstrom die Abgasreinigung der Wärmetauschstufe nachgeschaltet ist.

20. Verfahren nach Anspruch 18 oder 19, dadurch gekennzeichnet, daß der Abgasreinigungsreaktor bezogen auf die Schwerkraftrichtung oberhalb des Restwärmetauschers angeordnet ist.

21. Verfahren nach Anspruch 19 oder 20, dadurch gekennzeichnet, daß der Zwischenträgermedium-Umlauf einen ersten Zwischenträgermedium-Kreislauf, in dem das Zwischenträgermedium Wärme aus dem Abgas aufnimmt, und einen zweiten Zwischenträgermedium-Kreislauf, in dem das Zwischenträgermedium zur Reinigung des Abgases dient, umfaßt.

22. Verfahren nach Anspruch 21, dadurch gekennzeichnet, daß das Zwischenträgermedium in einer Führungsstrecke des Zwischenträgermedium-Umlaufs geführt wird, welche dem ersten und dem zweiten Zwischenträgermedium-Kreislauf gemeinsam ist.

23. Verfahren nach Anspruch 21 oder 22, dadurch gekennzeichnet, daß das Zwischenträgermedium mittels eines Zwischenträgermedium-Heizwasser-Wärmetauschers, welcher im ersten Zwischenträgermedium-Kreislauf angeordnet ist, Wärme an Heizwasser in einem Heizkreis abgibt.

24. Verfahren nach einem der Ansprüche 20 bis 23, dadurch gekennzeichnet, daß der Massestrom des Zwischenträgermediums im zweiten Zwischenträgermedium-Kreislauf beim 2,8-fachen bis 25-fachen und insbesondere beim ca. 7-fachen des Massestroms im ersten Zwischenträgermedium-Kreislauf liegt.

25. Verfahren nach einem der Ansprüche 21 bis 24, dadurch gekennzeichnet, daß die gemeinsame Führungsstrecke für das Zwischenträgermedium einen Abgasreinigungsraum des Abgasreinigungsreaktors umfaßt.

26. Verfahren nach Anspruch 25, dadurch gekennzeichnet, daß Zwischenträgermedium von dem Abgasreinigungsreaktor dem Restwärmetauscher zugeführt wird.

27. Verfahren nach Anspruch 26, dadurch gekennzeichnet, daß Zwischenträgermedium von der Zuführung vom Abgasreinigungsreaktor zum Restwärmetauscher zur Bildung des zweiten Zwischenträgermedium-Kreislaufs abgezweigt wird.

28. Verfahren nach einem der Ansprüche 20 bis 27, dadurch gekennzeichnet, daß Zwischenträgermedium im zweiten Zwischenträgermedium-Kreislauf durch einen Neutralisator geführt wird, in welchem das Neutralisationsmittel angeordnet ist.

29. Verfahren nach Anspruch 28, dadurch gekennzeichnet, daß ein Brennerstillstand ein Anhalten der Zirkulation des Zwischenträgermediums im zweiten Zwischenträgermedium-Kreislauf bewirkt.

30. Verfahren nach Anspruch 29, dadurch gekennzeichnet, daß bei Stillstand des Brenners das Zwischenträgermedium im ersten Zwischenträgermedium-Kreislauf zur Abgabe der aufgenommenen Wärme noch mindestens einen Umlauf durchführt.

31. Verfahren nach Anspruch 29 oder 30, dadurch gekennzeichnet, daß das Anhalten der Zirkulation des Zwischenträgermediums im zweiten Zwischenträgermedium-Kreislauf in einer bestimmten Zeitspanne vor dem Brennerstillstand erfolgt.

32. Verfahren nach Anspruch 31, dadurch gekennzeichnet, daß ein Brennschlußsignal der Feuerungsanlage vor dem Bewirken eines Brennerstillstands ein Anhalten der Zirkulation des Zwischenträgermediums im zweiten Zwischenträgermedium-Kreislauf bewirkt.

33. Verfahren nach einem der Ansprüche 29 bis 32, dadurch gekennzeichnet, daß das Anhalten der Zirkulation von Zwischenträgermedium im zweiten Zwischenträgermedium-Kreislauf durch das Schließen eines Steuerventils bewirkt wird.

34. Vorrichtung zur Reinigung und insbesondere Entschwefelung eines Abgases einer Feuerungsanlage und insbesondere einer Ölfeuerungsanlage, welche einen Restwärmetauscher umfaßt, in dem durch das Abgas Restwärme, welche restliche fühlbare und latente Wärme umfaßt, an ein Zwischenträgermedium abgebbar ist, wobei das Abgas mittels des Zwischenträgermediums reinigbar ist und wobei das Zwischenträgermedium in einem Zwischenträgermedium-Umlauf geführt ist, und welche einen Neutralisator mit einem Neutralisationsmittel zur Neutralisierung des Zwischenträgermediums umfaßt, dadurch gekennzeichnet, daß die Vorrichtung ein Mittel (126; 166) zum Abkoppeln des Zwischenträgermediums vom Neutralisationsmittel (158) umfaßt, um eine Überneutralisierung des Zwischenträgermediums zu verhindern.

35. Vorrichtung nach Anspruch 34, dadurch gekennzeichnet, daß bei Stillstand eines Brenners (14) der Feuerungsanlage (12) das Zwischenträgermedium vom Neutralisationsmittel (158) abkoppelbar ist.

36. Vorrichtung nach Anspruch 34 oder 35, dadurch gekennzeichnet, daß bei Anhalten einer Zirkulation des Zwischenträgermediums im Zwischenträgermedium-Umlauf (56) das Zwischenträgermedium vom Neutralisationsmittel (158) abkoppelbar ist.

37. Vorrichtung nach einem der Ansprüche 34 bis 36, dadurch gekennzeichnet, daß das Zwischenträgermedium durch das Neutralisationsmittel (158) auf einen pH-Wert von 5,5 bis 7 und insbesondere ca. 6,5 neutralisierbar ist.

38. Vorrichtung nach Anspruch 37, dadurch gekennzeichnet, daß das Neutralisationsmittel (158) ein Metalloxid und insbesondere ein Alkali- oder Erdalkalioxid ist.

39. Vorrichtung nach Anspruch 38, dadurch gekennzeichnet, daß das Neutralisationsmittel MgO ist.

40. Vorrichtung nach einem der Ansprüche 34 bis 39, dadurch gekennzeichnet, daß das Neutralisationsmittel (158) in Granulatform vorliegt.

41. Vorrichtung nach einem der Ansprüche 34 bis 40, dadurch gekennzeichnet, daß der Neutralisator (102; 144) mit dem Neutralisationsmittel (158) bezogen auf die Schwerkraftrichtung oberhalb (126) einer Abführung (44) eines Kondensatsumpfes (42) des Restwärmetauschers (38) angeordnet ist, so daß aus dem Neutralisator (102; 144) Zwischenträgermedium insbesondere bei Stillstand des Zwischenträgermedium-Umlaufs (56) ablaufen kann.

42. Vorrichtung nach einem der Ansprüche 34 bis 41, dadurch gekennzeichnet, daß die Vorrichtung zur Abgasreinigung und insbesondere Abgasentschwefelung einen Abgasreinigungsreaktor (48) umfaßt.

43. Vorrichtung nach Anspruch 42, dadurch gekennzeichnet, daß der Abgasreinigungsreaktor (48) bezogen auf den Abgasstrom nach dem Restwärmetauscher (38) angeordnet ist.

44. Vorrichtung nach Anspruch 42 oder 43, dadurch gekennzeichnet, daß der Abgasreinigungsreaktor (48; 132) bezogen auf die Schwerkraftrichtung oberhalb des Restwärmetauschers (38; 130) angeordnet ist.

45. Vorrichtung nach Anspruch 44, dadurch gekennzeichnet, daß der Abgasreinigungsreaktor (132) und der Restwärmetauscher eine Abgasreinigungs-Wärmetausch-Einheit (128) bilden.

46. Vorrichtung nach einem der Ansprüche 42 bis 45, dadurch gekennzeichnet, daß der Zwischenträgermedium-Umlauf (56) einen ersten Zwischenträgermedium-Kreislauf (58), in dem durch das Abgas Wärme an das Zwischenträgermedium abgebbar ist, und einen zweiten Zwischenträgermedium-Kreislauf (120), in dem das Abgas in dem Abgasreinigungsreaktor (48) durch das Zwischenträgermedium reinigbar ist, umfaßt.

47. Vorrichtung nach Anspruch 46, dadurch gekennzeichnet, daß der Zwischenträgermedium-Umlauf (56) eine Führungsstrecke (122) aufweist, die dem ersten (58) und dem zweiten (120) Zwischenträgermedium-Kreislauf gemeinsam ist.

48. Vorrichtung nach Anspruch 46 oder 47, dadurch gekennzeichnet, daß der zweite Zwischenträgermedium-Kreislauf ein Steuerventil (98) aufweist, mit welchem die Zirkulation des Zwischenträgermediums im zweiten Zwischenträgermedium-Kreislauf (120) sperrbar ist.

49. Vorrichtung nach Anspruch 48, dadurch gekennzeichnet, daß die Vorrichtung eine Steuerungs- und Regelungseinheit (99) aufweist, welche den Brenner (14) der Feuerungsanlage (12) steuert und über welchen das Steuerventil (98) im zweiten Zwischenträgermedium-Kreislauf (120) steuerbar ist.

50. Vorrichtung nach einem der Ansprüche 46 bis 49, dadurch gekennzeichnet, daß der Neutralisator (102; 144) im zweiten Zwischenträgermedium-Kreislauf (120) angeordnet ist.

51. Vorrichtung nach einem der Ansprüche 46 bis 50, dadurch gekennzeichnet, daß der Massestrom an Zwischenträgermedium mittels einem oder mehreren Massestrom-Steuerorganen (66; 116) im zweiten Kreislauf (120) so steuerbar ist, daß er das 2,8-fache bis 25-fache und insbesondere ca. Siebenfache des Massestroms an Zwischenträgermedium im ersten Kreislauf (58) beträgt.

52. Vorrichtung nach einem der Ansprüche 34 bis 51, dadurch gekennzeichnet, daß das Zwischenträgermedium aus einem Abgaskondensat gebildet ist.

53. Vorrichtung nach einem der Ansprüche 34 bis 52, dadurch gekennzeichnet, daß der Neutralisator (102; 144) so ausgebildet ist, daß eine Menge des im Neutralisator (102; 144) mit Zwischenträgermedium beaufschlagten Neutralisationsmittels (158) einstellbar ist.

54. Vorrichtung nach Anspruch 53, dadurch gekennzeichnet, daß das Maß der mit Zwischenträgermedium benetzbaren Neutralisationsmittel-Oberfläche einstellbar ist.

55. Vorrichtung nach Anspruch 54, dadurch gekennzeichnet, daß der Neutralisator einen Behälter (146) umfaßt, der von Zwischenträgermedium durchströmbar ist und in dem das Neutralisationsmittel (158) angeordnet ist.

56. Vorrichtung nach Anspruch 55, dadurch gekennzeichnet, daß der Neutralisator (144) eine Zuführung (166) aufweist, mittels der Zwischenträgermedium in den Behälter (146) mit Neutralisationsmittel (158) führbar ist, welche in der Höhe bezüglich eines im Behälter angeordneten Vorrats an Neutralisationsmittel (158) verschieblich ist.

57. Vorrichtung nach Anspruch 56, dadurch gekennzeichnet, daß die Zuführung (166) zwischen einem bezogen auf die Schwerkraftrichtung unteren Ende des Vorrats an Neutralisationsmittel (158) und einem oberen Ende des Behälters (146) verschieblich ist.

58. Vorrichtung nach Anspruch 56 oder 57, dadurch gekennzeichnet, daß die Zuführung (166) an einem bezogen auf die Schwerkraftrichtung oberen Ende in den Behälter (146) mit Neutralisationsmittel (158) des Neutralisators (144) geführt ist.

59. Vorrichtung nach einem der Ansprüche 56 bis 58, dadurch gekennzeichnet, daß der Behälter (146) mit Neutralisationsmittel (158) an seinem bezogen auf die Schwerkraftrichtung unteren Ende eine Abführung (170) für Zwischenträgermedium aufweist.

60. Vorrichtung nach einem der Ansprüche 56 bis 59, dadurch gekennzeichnet, daß der Behälter mit Neutralisationsmittel eine an einem oberen oder in der Nähe seines oberen Endes angeordnete Nachfüllvorrichtung (160) für Neutralisationsmittel (158) aufweist.

61. Vorrichtung nach einem der Ansprüche 34 bis 60, dadurch gekennzeichnet, daß der Restwärmetauscher (38; 130) ein Monodispers-Restwärmetauscher ist.

62. Neutralisator zur Neutralisierung eines flüssigen Mediums, insbesondere zur Neutralisierung eines Abgaskondensats in einer Heizungsanlage, bei welcher die Restwärme, welche restliche fühlbare und latente Wärme umfaßt, eines Abgases einer Feuerungsanlage der Heizungsanlage genutzt wird, welcher einen Behälter umfaßt, in dem ein Neutralisationsmittel angeordnet ist, und welcher von dem flüssigen Medium durchströmbar ist, dadurch gekennzeichnet, daß das Maß der Beaufschlagung des flüssigen Mediums mit Neutralisationsmittel (158) im Neutralisator (144) mittels einer Flüssigmedium-Zuführungsvorrichtung (166, 174) einstellbar ist.

63. Neutralisator nach Anspruch 62, dadurch gekennzeichnet, daß durch die Flüssigmedium-Zuführungsvorrichtung (166, 174) ein Flüssigkeitsspiegel (178) an flüssigem Medium in dem Behälter (146), in welchem das Neutralisationsmittel (158) angeordnet ist, einstellbar ist.

64. Neutralisator nach Anspruch 63, dadurch gekennzeichnet, daß die Flüssigmedium-Zuführungsvorrichtung eine Zuführung (166) umfaßt, welche bezüglich der Anordnung des Neutralisationsmittels (158) im Neutralisator (144) in der Höhe verschieblich ist.

65. Neutralisator nach Anspruch 64, dadurch gekennzeichnet, daß die Zuführung (166) bezogen auf die Schwerkraftrichtung an einem oberen Ende des Behälter (146) mit Neutralisationsmittel (158) in diesen geführt ist.

66. Neutralisator nach Anspruch 64 oder 65, dadurch gekennzeichnet, daß die Zuführung (166) in einem Bereich, welcher bezogen auf die Schwerkraftrichtung ein unteres Ende eines Vorrats an Neutralisationsmittel in dem Behälter (146) und ein oberes Ende des Behälters (146) umfaßt, verschieblich ist.

67. Neutralisator nach einem der Ansprüche 64 bis 66, dadurch gekennzeichnet, daß die Zuführung durch ein Rohr (166) gebildet ist, das in dem Behälter (146) verschieblich ist.

68. Neutralisator nach einem der Ansprüche 62 bis 67, dadurch gekennzeichnet, daß der Behälter (146) mit Neutralisationsmittel (158) an seinem unteren Ende eine Abführung (170) für das flüssige Medium aufweist.

69. Neutralisator nach einem der Ansprüche 62 bis 68, dadurch gekennzeichnet, daß der Behälter (146) an oder in der Nähe seines oberen Endes eine Nachfüllvorrichtung (160) für Neutralisationsmittel (158) aufweist.

70. Neutralisator nach einem der Ansprüche 62 bis 69, dadurch gekennzeichnet, daß das Neutralisationsmittel (158) als Granulat vorliegt.

71. Neutralisator nach einem der Ansprüche 68 bis 70, dadurch gekennzeichnet, daß ein Durchmesser des Behälters (146) mit Neutralisationsmittel (158) und ein Durchmesser der Abführung (170) für flüssiges Medium so angepaßt sind, daß flüssiges Medium ohne Rückstau durch den Neutralisator (144) strömbar ist.
